# DEMANDE DE BREVET EUROPEEN

(11) **EP 4 851 456 A1**
(43) Date de publication de la demande: **09.12.2026**
(21) Numéro de dépôt: 26174887.5
(22) Date de dépôt: 27.04.2026
(51) Int. Cl.: F03D 3/00, F03D 3/04

(54) **DISPOSITIF ÉOLIEN AVEC ÉOLIENNE, BOOSTER DE PUISSANCE ET RÉGULATEUR DE VITESSE**

(30) Priorité: 03.06.2025 FR 2505942
(71) Demandeur: Abadie, Jean, 09100 Bonnac (FR)
(72) Inventeur: ABADIE, Jean, 09100 Bonnac (FR)
(74) Mandataire: Ipsilon

(57) **Abrégé**

L'invention concerne un dispositif éolien installé à l'intérieur d'un bâtiment, réunissant trois systèmes consistant en :
- une éolienne,
- un booster de puissance, et
- un régulateur de vitesse,

le booster est destiné principalement à augmenter la puissance de l'éolienne, captant une quantité d'énergie supplémentaire venant s'ajouter à celle arrivant naturellement sur les pales et à neutraliser les forces parasites s'opposant à la rotation,
le régulateur intervient ponctuellement pour maintenir la rotation de l'éolienne sous l'emprise de vents violents, pour limiter sa vitesse, pour garantir sa sécurité, pour augmenter sa durée de travail et pour améliorer sa productivité,
l'éolienne est conçue sur le modèle d'une roue à aubes et son fonctionnement, basé sur le même principe, est entièrement dépendant du booster de puissance et du régulateur de vitesse.

## Description

### [Domaine technique]

L'invention concerne un dispositif éolien réunissant trois systèmes : une turbine ou éolienne, un booster de puissance et un dispositif régulateur de vitesse. L'invention concerne aussi un tel dispositif éolien pour son implantation dans un bâtiment et un bâtiment équipé d'un tel dispositif éolien.

L'invention trouve ses applications dans la production d'électricité.

### [Contexte de l'invention]

Les éoliennes sont classées en deux catégories : les éoliennes à axe de rotation vertical et les éoliennes à axe de rotation horizontal.

Les éoliennes à axe de rotation vertical, notamment les éoliennes du type Savonius ou Darrieus, possèdent de nombreux avantages, parmi lesquels :
- une installation simple,
- un encombrement réduit,
- un niveau sonore faible,
- un démarrage facile.

Ces avantages procurent à ces éoliennes à axe de rotation vertical de nombreuses qualités avantageuses pour leur installation en milieu urbain.

Mais ces éoliennes à axe de rotation vertical présentent cependant deux inconvénients majeurs, à savoir :
- une puissance insuffisante, et
- un rendement trop faible, d'une valeur de l'ordre de 17 % à 20 %, alors que les éoliennes à axe horizontal présentent des rendements de 35 % à 45 %.

Ces faiblesses écartent les éoliennes à axe vertical du domaine industriel, les confinant dans des usages domestiques encore très limités à ce jour.

Ainsi, l'électricité issue de l'énergie éolienne est produite, en quasi-totalité, par des éoliennes à axe de rotation horizontal. Il s'agit de machines gigantesques, produisant de l'électricité à une échelle industrielle. Les éoliennes à axe de rotation horizontal ont supplanté les éoliennes à axe de rotation vertical, dites « petit éolien ». Si ces géants présentent des atouts, ils présentent des inconvénients majeurs, telles que la production de nuisances environnementales, soulevant un rejet par la population.

A ce jour, de nombreux particuliers souhaitent produire leur propre électricité à partir des énergies renouvelables, mais les solutions techniques disponibles ne sont pas entièrement satisfaisantes. En particulier, les panneaux photovoltaïques ne constituent qu'un pis-aller.

La présente invention vise à proposer un dispositif éolien de taille adaptée à la demande des particuliers, des petites collectivités ou entreprises.

La présente invention vise à proposer un tel dispositif éolien plus productif et plus puissant que les panneaux photovoltaïques, plus puissant que le « petit éolien » existant.

La présente invention vise aussi à proposer un tel dispositif éolien plus productif et plus puissant que les panneaux photovoltaïques.

La présente invention vise aussi à proposer un tel dispositif éolien qui soit performant et adaptable à toutes les demandes du marché.

### [Exposé de l'invention]

L'invention concerne un dispositif éolien disposé dans un bâtiment et réunissant, au sein de ce même bâtiment, trois systèmes :
- une éolienne,
- un booster de puissance, et
- un régulateur de vitesse,

le dispositif éolien étant caractérisé en ce que :
   - l'éolienne est constituée d'un arbre central, vertical, cylindrique et rotatif sur lequel est installée au moins une architecture comparable à celle d'une roue à aubes, comportant des pales ou des aubes formant les rayons de la roue, les pales comprennent chacune un cadre rectangulaire rigide, fixé verticalement sur l'arbre central,
   - le booster de puissance forme un conduit -ou couloir- limité par deux parois verticales de guidage d'un flux venteux entrant dans le booster de puissance, une première de ces deux parois verticales est composée, dans sa partie centrale, d'un bouclier englobant l'éolienne et est prolongée vers l'extérieur par un déflecteur incliné par rapport à l'axe d'allongement du conduit, de façon à former un conduit évasé à ses extrémités longitudinales et formant un goulot d'étranglement au niveau du bouclier,
une deuxième de ces deux parois verticales du conduit est une paroi s'étendant en regard de la première paroi et constituée d'une cloison sensiblement rectiligne et d'une longueur égale au diamètre du bouclier,
l'arbre central de rotation de l'éolienne étant décalé latéralement par rapport au goulot d'étranglement et ne s'étendant pas dans le goulot d'étranglement, de sorte que le flux venteux circulant dans le goulot d'étranglement ne coopère qu'avec une partie des pales ouvertes au vent, ladite partie de pales formant l'extrémité libre des pales, ce par quoi le flux venteux entrant dans le booster de puissance est orienté sur le bord extérieur des pales ouvertes au vent, le moment de la force de rotation étant ainsi optimisé, entraînant un gain de puissance et de vitesse de rotation de l'éolienne,
   - le régulateur de vitesse comporte deux portes coulissantes et un programmateur, connecté à au moins un instrument de mesure choisi parmi une girouette, un anémomètre et un compte tour,
les portes coulissantes étant installées au niveau du goulot d'étranglement, à l'extérieur du conduit, derrière la paroi du conduit faisant face à l'éolienne qu'elles encadrent longitudinalement, conduit dans lequel elles peuvent être déplacées.

Selon certains modes de réalisation, le programmateur est connecté à un ensemble d'instruments de mesure comportant au moins un compte tour.

Selon certains modes de réalisation, les pales sont au nombre de quatre (4), de cinq (5) ou de six (6).

Selon certains modes de réalisation, les pales sont au nombre de sept (7) ou de huit (8) et forment des rayons de la roue.

Selon certains modes de réalisation, les pales sont au nombre de huit (8) et forment des rayons de la roue.

Selon certains modes de réalisation, les pales sont réunies entre elles - notamment réunies entre elles et solidarisées- par un ensemble de barres stabilisatrices disposées horizontalement; chacune reliant par ses extrémités les cadres de deux pales voisines,
l'ensemble des barres stabilisatrices forme un premier polygone régulier centré sur l'arbre central de rotation et installé dans un plan horizontal, et un deuxième polygone régulier, semblable au premier polygone et composé de barres stabilisatrices plus courtes, installé de manière identique, est associé au premier polygone pour former une structure solidarisant tous les éléments de l'éolienne, deux ou trois structures de ce type sont superposées et centrées sur l'arbre central de rotation pour renforcer la charpente de l'éolienne: une près du sommet, une autre près de la base, éventuellement une troisième équidistante des deux autres.

Selon certains modes de réalisation, au moins une pale -notamment chaque pale, préférentiellement chacune des huit pales- forme(nt) deux parties délimitées par le cadre, dont :
- une partie rectangulaire ajourée en son centre et s'étendant radialement à partir de l'arbre central de rotation, et ;
- une partie rectangulaire pleine, adjacente à la partie rectangulaire ajourée et s'étendant radialement vers l'extérieur de la roue en prolongement de la partie rectangulaire ajourée.

Selon certains de ces modes de réalisation, la partie rectangulaire pleine de chaque pale forme de 20% à 25% de la surface totale de la pale.

Selon certains de ces modes de réalisation, la partie rectangulaire pleine de chaque pale est constituée d'un panneau réalisé en au moins un matériau rigide, léger et résistant.

Selon certains modes de réalisation, la partie centrale de chaque pale est constituée d'un panneau réalisé en au moins un matériau rigide, léger et résistant.

Selon certains modes de réalisation, les pales étant au nombre de huit (8) et formant des rayons de la roue, les barres stabilisatrices forment trois ensembles de barres formant chacun trois octogones réguliers coaxiaux et coplanaires, dont :
- un premier octogone régulier périphérique centré sur l'arbre central de rotation et s'étendant dans un plan horizontal ;
- un deuxième octogone régulier interne, composé de barres stabilisatrices de longueur plus courte que les barres formant le premier octogone régulier et s'étendant dans le même plan horizontal ;
- un troisième octogone régulier intermédiaire, composé de barres stabilisatrices de longueur intermédiaire et s'étendant dans le même plan horizontal ;

les premier, deuxième et troisième octogone régulier étant assemblés pour former une structure solidarisant tous les éléments de l'éolienne,
trois ensembles de barres stabilisatrices étant disposés et centrés par rapport à l'arbre central de rotation, renforçant la charpente de l'éolienne: un près du sommet, un autre près de la base, un troisième équidistant des deux autres.

Selon certains modes de réalisation, le cadre rectangulaire rigide de chaque pale porte un aileron de petite dimension, sur un bord extérieur vertical du cadre, L'aileron de petite dimension installé sur le bord extérieur et vertical de la pale, permet d'améliorer la poussée du flux venteux.

Selon certains modes de réalisation, le déflecteur est incliné d'une valeur d'angle de 30° par rapport à l'axe d'allongement du conduit.

Selon certains modes de réalisation, le déflecteur est incliné d'une valeur d'angle de 30° à 40° -notamment de 35° à 40°- par rapport à l'axe d'allongement du conduit.

Selon certains modes de réalisation, l'arbre central de rotation de l'éolienne s'étend latéralement en retrait par rapport au goulot d'étranglement, l'extrémité libre des pales s'étendant dans le goulot d'étranglement.

Selon certains modes de réalisation, le booster de puissance forme un couloir limité par deux parois verticales de guidage d'un flux venteux entrant dans le booster de puissance,
- une première de ces deux parois verticales est composée, dans sa partie centrale, d'un bouclier hémicylindrique en creux recevant une moitié de l'éolienne et d'axe longitudinal sensiblement vertical ;
   les bords parallèles verticaux du bouclier hémicylindrique étant prolongé par un bras d'une longueur correspondant à de l'ordre de 15% à 20% du rayon de l'éolienne ;
   chaque bras est prolongé selon l'axe longitudinal du couloir, par un avant-bras soudé au bras et formant un angle de l'ordre de 90° avec le bras, la longueur (selon l'axe longitudinal du couloir) de l'avant-bras représentant approximativement le rayon de l'éolienne ;
   chaque avant-bras est prolongé vers l'extérieur selon l'axe d'allongement du couloir, par un déflecteur incliné d'une valeur d'angle de 30° à 40° -notamment de 35° à 40°- par rapport à l'axe d'allongement du couloir ;
- une deuxième de ces deux parois verticales du conduit est une paroi s'étendant en regard de la première paroi et constituée dans sa partie centrale d'une cloison sensiblement rectiligne s'étendant en regard de l'éolienne, d'une longueur sensiblement égale au diamètre de l'éolienne et prolongée à ses extrémités longitudinales par une paroi symétrique de l'avant-bras et du déflecteur de la première paroi verticale ;
   le couloir formé par les première et deuxième parois du booster de puissance contient l'éolienne, est évasé à ses extrémités longitudinales ouvertes aux vents, et forme dans sa partie centrale un rétrécissement formant le goulot d'étranglement et recevant la partie rectangulaire pleine des pales ;
   les éléments formant les première et deuxième parois du booster de puissance - notamment le bouclier, les bras, les avant-bras, les déflecteurs et les cloisons-étant de même hauteur, sensiblement supérieure à la hauteur de l'éolienne.

Selon l'invention, l'arbre central de rotation de l'éolienne s'étend latéralement en retrait par rapport au goulot d'étranglement, l'extrémité libre des pales s'étendant dans le goulot d'étranglement.

Selon certains modes de réalisation, l'arbre central de rotation de l'éolienne est décalé vers l'extérieur par rapport au goulot d'étranglement, d'une distance correspondant à de l'ordre de 15% du rayon de l'éolienne.

Selon certains modes de réalisation, le bouclier est encadré par deux bras prolongeant le bouclier. Selon certains modes de réalisation, chaque bras est prolongé par un avant-bras soudé au bras et formant avec le bras un angle de 90°, chaque avant-bras étant prolongé vers l'extérieur selon l'axe d'allongement du conduit par un déflecteur incliné de 30° par rapport à l'axe d'allongement du conduit, de façon à former le goulot d'étranglement au niveau des avant-bras.

Selon certains modes de réalisation, le bras et l'avant-bras sont constitués chacun d'un panneau rigide rectangulaire d'une même hauteur que la hauteur du bouclier, la hauteur du bouclier, du bras et de l'avant-bras s'étendant parallèlement à l'arbre central de rotation de l'éolienne. Selon certains modes de réalisation, le bras présente une longueur de valeur sensiblement égale à 25% de la valeur du rayon de l'éolienne et est fixé sur une arête verticale du bouclier. Selon certains modes de réalisation, l'avant-bras présente une longueur de valeur sensiblement égale à la valeur du rayon de l'éolienne.

Selon certains modes de réalisation, chaque déflecteur est de même hauteur que l'avant-bras.

Selon certains modes de réalisation, la première paroi et la deuxième paroi verticales du booster de puissance forment un conduit évasé à ses extrémités longitudinales. Elles ceinturent l'éolienne sur plus de la moitié de sa circonférence et forment un goulot d'étranglement. Selon certains modes de réalisation, la largeur du conduit au niveau du goulot d'étranglement est de valeur comprise entre de l'ordre de 80% du rayon de l'éolienne et de l'ordre de 100% du rayon de l'éolienne. Selon certains modes de réalisation, les pales de l'éolienne sont séparées de la deuxième paroi verticale par une distance égale à la longueur du bras.

Selon certains modes de réalisation, le bouclier forme un demi cylindre creux ceinturant une moitié de l'éolienne et d'une hauteur égale à celle des pales, chacun des bras étant constitué d'un panneau rigide rectangulaire d'une hauteur égale à celle du bouclier,
chacun des bras étant fixé sur l'une des arrêtes verticales du bouclier et s'étendant dans le prolongement à l'extérieur du bouclier et étant aligné sur l'axe de coupe du demi cylindre,
chaque déflecteur est constitué d'un panneau rigide rectangulaire d'une hauteur égale à celle du bouclier, chacun étant fixé sur une arrête verticale d'un avant-bras prolongeant le bras et présentant une inclinaison de l'ordre de 30° par rapport à l'axe de coupe du demi cylindre.

Selon certains modes de réalisation, les portes coulissantes sont adaptées chacune pour pouvoir être déplacée -indépendamment l'une de l'autre- de façon à pouvoir obturer au moins partiellement le conduit,
l'une des deux portes coulissantes, dite porte sous le vent, étant adaptée pour pouvoir être déplacée à partir d'une position d'ouverture de ladite porte sous le vent dans laquelle ladite porte sous le vent n'est pas engagée dans le conduit, le conduit étant ouvert, et pour pouvoir atteindre au moins une position prédéterminée de fermeture au moins partielle de ladite porte sous le vent, position de fermeture dans laquelle un bord libre de ladite porte sous le vent en déplacement dans le conduit est amené en rapprochement de l'arbre de rotation de l'éolienne, le conduit étant au moins partiellement fermé, ce par quoi le moment de la force appliquée sur la pale est modifié -notamment est diminué- par la diminution du rayon de la partie d'éolienne exposée au vent.

Selon certains modes de réalisation, le dispositif éolien selon l'invention est solidairement associé pour son fonctionnement, à un bâtiment de forme globalement parallélépipédique rectangle comportant deux façades opposées perpendiculaires à l'axe d'un vent dominant.

Selon certains modes de réalisation, le dispositif éolien selon l'invention est installé à l'intérieur du bâtiment, dans les étages élevés.

Selon certains modes de réalisation, le dispositif éolien est placé entre deux planchers horizontaux sur lesquels il est fixé.

Selon certains modes de réalisation, les extrémités du booster de puissance sont positionnées sur deux façades opposées du bâtiment, ouvertes sur le milieu extérieur et sensiblement orthogonales à l'axe d'un vent dominant, notamment orthogonales à l'axe des vents dominants.

Contrairement aux éoliennes implantées sur des sites dégagés de tout obstacle, Le dispositif éolien selon l'invention et l'éolienne dudit dispositif éolien sont logés dans un ouvrage maçonné. Bien qu'elle puisse paraître handicapante, l'invention est en fait très avantageuse, comme le montrera ci-après le fonctionnement global du dispositif éolien, permettant à l'éolienne de recevoir l'aide du booster de puissance et du régulateur de vitesse, dopant puissance et productivité, balayant les inconvénients présumés.

Selon certains modes de réalisation, le booster de puissance comporte des moyens adaptés permettant de créer, avec les deux parois verticales, un conduit - ou un couloir- canalisant le vent.

Selon certains modes de réalisation, le booster de puissance comporte des moyens adaptés permettant d'élargir les extrémités du conduit par les déflecteurs, augmentant de ce fait la quantité d'énergie poussée à l'intérieur du conduit, facilitant le démarrage de l'éolienne et maintenant sa rotation par des vents très faibles.

Selon certains modes de réalisation, le booster de puissance comporte des moyens adaptés permettant de neutraliser le flux opposé à la rotation, le déviant et le transformant partiellement en un flux productif, du fait de la paroi contenant le bouclier.

Selon certains modes de réalisation, le booster de puissance comporte des moyens adaptés permettant de créer un rétrécissement du conduit au niveau des avant-bras, entraînant une accélération de la vitesse d'écoulement du vent entrant en contact avec la(les) pale(s).

Selon certains modes de réalisation, le booster de puissance comporte des moyens adaptés permettant de diriger le flux venteux traversant le booster de puissance sur un bord extérieur des pales ouvertes au vent, en augmentant le moment de la force de rotation et entrainant un gain de puissance et de vitesse de l'éolienne.

Selon certains modes de réalisation, les portes coulissantes du régulateur de vitesse sont adaptées pour pouvoir modifier le fonctionnement de l'éolienne, permettant de maîtriser la vitesse de l'éolienne, la réduisant ou l'annulant si nécessaire conformément aux normes de sécurité.

Selon certains modes de réalisation, lors d'une intervention du régulateur de vitesse seule la porte, dite porte sous le vent, située face à l'arrivée du vent, est déplacée vers l'intérieur du conduit, cette manœuvre produisant deux effets, dont :
- un premier effet, de diminution de la quantité d'énergie mise à disposition de l'éolienne, une partie étant absorbée par la porte, et
- un deuxième effet, prépondérant, de modification et de réduction du moment de la force s'exerçant sur les pales ouvertes au vent. La distance entre les points d'application de la force sur les pales ouvertes au vent et le centre de rotation étant réduite du fait du déplacement de ladite porte sous le vent. Les effets cumulés de la manœuvre aboutissent à une diminution de la puissance procurée à l'éolienne et à un ralentissement de la vitesse de l'éolienne, voire à son arrêt.

Selon certains modes de réalisation, le fonctionnement des portes coulissantes du régulateur de vitesse est adapté pour pouvoir maintenir la rotation de l'éolienne sous l'emprise de vents violents, augmentant son temps de travail et produisant dans ces conditions, une puissance optimale.

Selon certains modes de réalisation, le dispositif éolien selon l'invention comporte un organe, formé du booster de puissance et du régulateur de vitesse, contrôlant entièrement le fonctionnement du dispositif éolien, permettant à l'éolienne de produire sa rotation.

Selon certains modes de réalisation, le dispositif éolien selon l'invention comporte un organe, formé du booster de puissance et du régulateur de vitesse, contrôlant entièrement le fonctionnement du dispositif éolien, permettant à l'éolienne de maîtriser sa vitesse.

Selon certains modes de réalisation, le dispositif éolien selon l'invention comporte un organe, formé du booster de puissance et du régulateur de vitesse, contrôlant entièrement le fonctionnement du dispositif éolien, permettant à l'éolienne de garantir sa sécurité.

Selon certains modes de réalisation, le dispositif éolien selon l'invention comporte un organe, formé du booster de puissance et du régulateur de vitesse, contrôlant entièrement le fonctionnement du dispositif éolien, permettant à l'éolienne d'augmenter sa puissance.

Selon certains modes de réalisation, le dispositif éolien selon l'invention comporte un organe, formé du booster de puissance et du régulateur de vitesse, contrôlant entièrement le fonctionnement du dispositif éolien, permettant à l'éolienne d'améliorer sa productivité.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] la Figure 1 est une représentation schématique d'un premier mode de réalisation d'un dispositif éolien selon l'invention, en vue de dessus, comportant une unique éolienne à l'arbre central de rotation vertical, un booster de puissance et un régulateur de vitesse ;
[Fig. 2] la Figure 2 est une représentation schématique de trois dispositifs éoliens selon l'invention en vue de dessus, installés verticalement sur e même plan ; les extrémités du booster de puissance étant, pour chacun d'eux, alignées parallèlement à l'axe des vents dominants ;
[Fig. 3] la Figure 3 est une représentation schématique, en coupe verticale d'une partie d'un ensemble, dit « éol-tower », comportant deux dispositifs éoliens selon l'invention, installés horizontalement sur des niveaux différents, les extrémités de chaque booster de puissance étant orientées face aux vents dominants ;
[Fig. 4] la Figure 4 est une représentation schématique d'un deuxième mode de réalisation d'un dispositif éolien selon l'invention, en vue de dessus, comportant une unique éolienne à arbre central de rotation vertical, un booster de puissance et un régulateur de vitesse ;
[Fig. 5] la Figure 5 est une représentation schématique d'un troisième mode de réalisation d'un dispositif éolien selon l'invention, en vue de dessus, comportant une unique éolienne à arbre central de rotation vertical, un booster de puissance et un régulateur de vitesse, les pales de l'éolienne étant solidarisées par des barres stabilisatrices ;
[Fig. 6] la Figure 6 est une illustration schématique d'un mode de fonctionnement d'un dispositif éolien selon l'invention, montrant l'impact du vent sur les pales dans le goulot d'étranglement, et ;
[Fig. 7] la Figure 7 est une illustration schématique d'un dispositif comprenant deux dispositifs éoliens selon l'invention vus de dessus, disposés sur le même plan, les extrémités longitudinales opposées de chaque dispositif éolien étant placées sur deux façades opposées d'un bâtiment, perpendiculairement à l'axe d'un vent dominant.

### [Description des modes de réalisation]

Selon l'invention, le captage de l'énergie cinétique du vent est effectué par le booster. L'éolienne assume une seule fonction identique à celle de toutes les turbines, consistant à convertir l'énergie reçue en un mouvement rotatif. Pour cette raison, elle est désignée dans la partie descriptive de l'invention, par le terme « éolienne » ou par le terme « turbine ». Cette organisation avantageuse du dispositif éolien selon l'invention permet une réduction de la taille de l'éolienne et son implantation dans un bâtiment, du fait que la fonction de captage de l'énergie cinétique du vent est dévolue au booster de puissance.

L'éolienne reçoit naturellement une partie de l'énergie présente dans le milieu extérieur et la convertit en un mouvement rotatif entraînant un générateur d'électricité.

Pour augmenter sa puissance, la solution proposée par l'invention consiste à capter une quantité d'énergie supplémentaire s'ajoutant à celle arrivant naturellement sur les pales et à diriger le flux venteux entrant dans le booster de puissance sur le bord extérieur de la (des) pale(s) ouverte(s) au vent, augmentant le moment de la force de rotation et entraînant un gain de puissance et de vitesse.

Pour améliorer la productivité, l'invention repose sur des allongements de la durée de fonctionnement, obtenus en adaptant le dispositif éolien en fonction de la vitesse du vent.

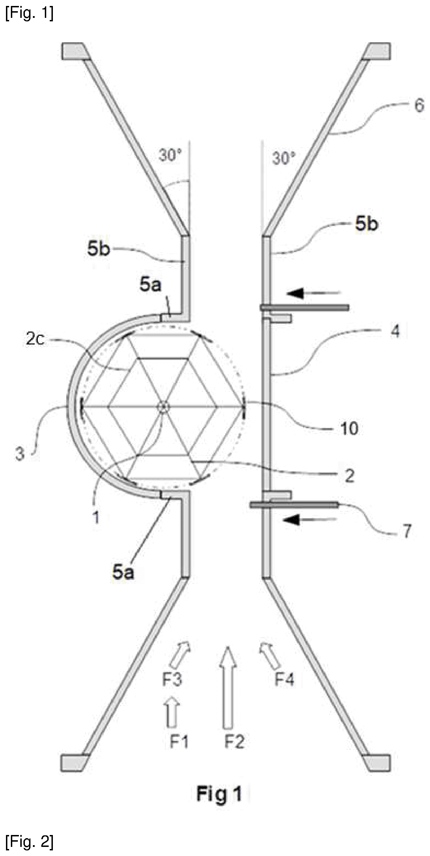

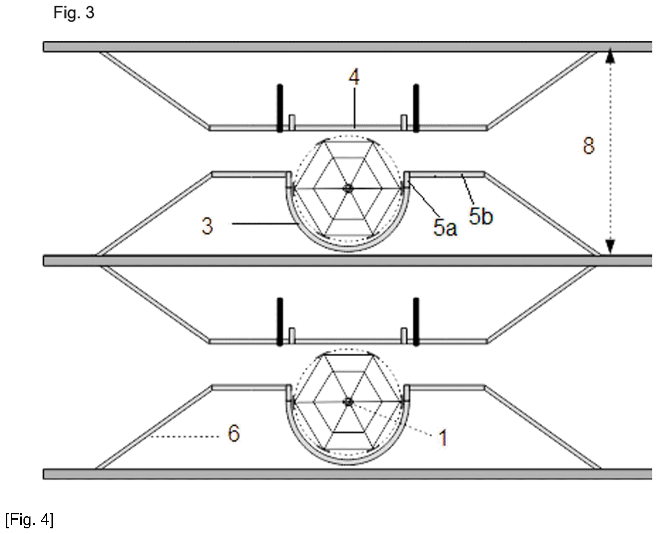

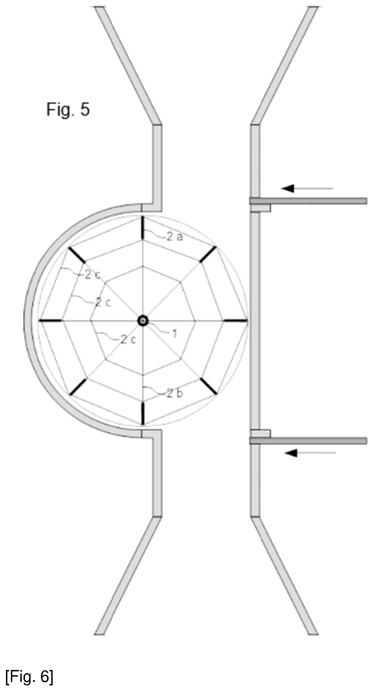

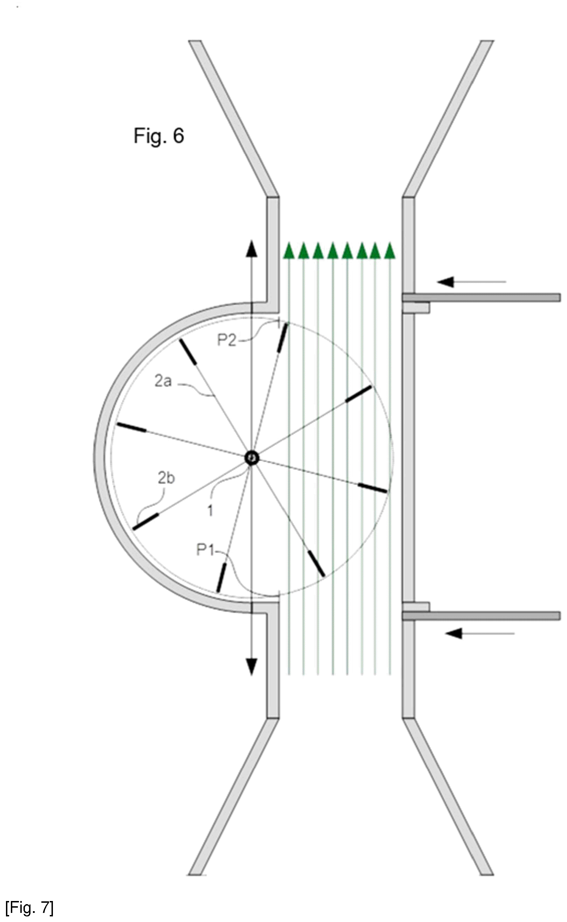

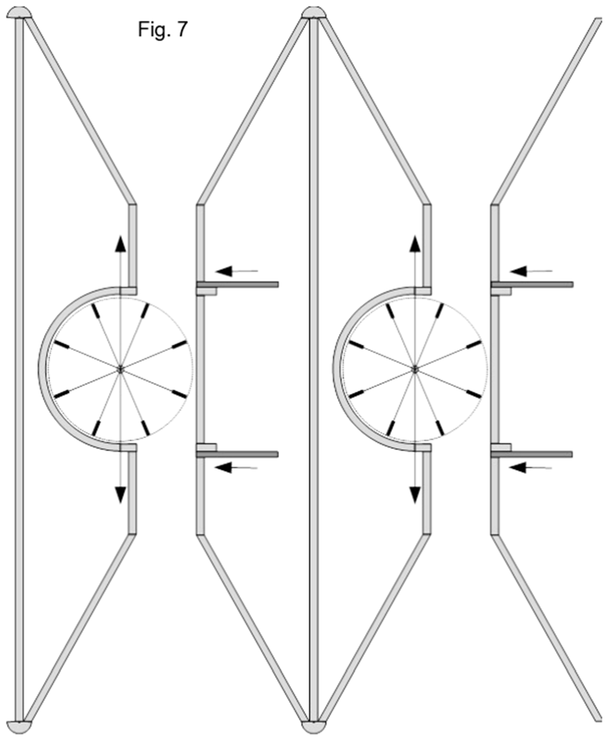

Des moyens illustrés en Figures 1 à 7 sont mis en œuvre pour assurer le fonctionnement du dispositif éolien selon l'invention et pour satisfaire les objectifs d'amélioration de sa puissance, de sa productivité et de garantie de sa sécurité. Ces moyens mobilisent une éolienne présentant des pales 2,2a,2b fixées sur un arbre central 1 cylindrique. Dans les modes de réalisation représentés, l'éolienne présente six pales 2,2a,2b. Les pales 2,2a,2b sont disposées régulièrement autour de l'arbre central 1 cylindrique. Dans le mode de réalisation représenté en Figures 1, 2 et 3, les pales 2,2a,2b portent chacune n aileron 10 sur un bord extérieur. Les pales 2 sont solidarisées entre elles par des barres 2c de stabilisation constituant en partie l'architecture de la partie rotor.

Ces moyens mobilisent le booster de puissance formant un conduit 8 ou couloir constitué de deux parois verticales globalement symétriques, formées des mêmes éléments à l'exception d'un bouclier 3 inséré dans l'une des parois et remplacé dans l'autre par une cloison rectiligne 4. Chaque paroi est constituée de deux déflecteurs 6, de deux bras 5a et de deux avant-bras 5b, du bouclier 3 ou de la cloison 4 ou paroi s'étendant en regard du bouclier 3.

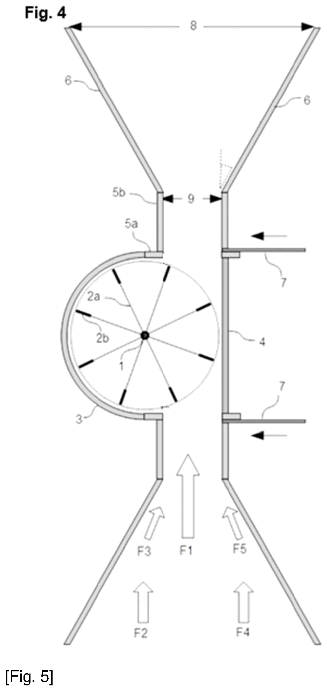

En regard de la Figure 4 illustrative d'un dispositif éolien selon un mode de réalisation de l'invention dans lequel l'éolienne est une éolienne à huit pales, le booster de puissance permet :
- d'absorber le flux venteux par une de ces extrémités 8 évasée au niveau de la façade du bâtiment,
- de canaliser le vent entrant dans le booster de puissance, au moyen des deux parois verticales formant le déflecteur 6,
- de neutraliser un flux F2 parasite s'opposant à la rotation, de le dévier avec le déflecteur 6 et de le transformer en un flux F3 dérivé moins puissant mais productif au moyen de la paroi formant le bouclier 3,
- de dévier le flux F4 au moyen de la paroi opposée du booster de puisance, le transformant en un flux dérivé F5,
- d'élargir les extrémités 8 du conduit et d'augmenter la quantité d'énergie accédant à l'éolienne, au moyen des déflecteurs 6,
- d'accélérer la vitesse d'écoulement du flux venteux arrivant au contact des pales 2,2a,2b au moyen du goulot d'étranglement 9 formé par les bras 5a et les avant-bras 5b,
de diriger le flux venteux sur les pales 2,2a,2b exposées dans le goulot d'étranglement 9, augmentant le moment de la force produisant la rotation.

Ces moyens mobilisent le régulateur de vitesse formé comprenant des portes ou les volets 7 contrôlées par un programmateur, connecté à au moins un instrument de mesure choisi parmi une girouette, un anémomètre et un compte tour.

Les portes coulissantes 7 du régulateur de vitesse sont installées au niveau du goulot d'étranglement 9, à l'extérieur du couloir, derrière la paroi faisant face à l'éolienne qu'elles encadrent longitudinalement. Les portes coulissantes 7 du régulateur de vitesse sont adaptées pour pouvoir être déplacées vers l'intérieur ou vers l'extérieur du booster de puissance, de façon à pouvoir réduire ou augmenter le moment de la force du flux venteux produisant la rotation et la vitesse de l'éolienne.

En regard de la Figure 1 illustrative d'un dispositif éolien selon un mode de réalisation de l'invention dans lequel l'éolienne est une éolienne à six pales, l'interaction de l'éolienne, du booster de puissance et du régulateur de vitesse permet :
- de canaliser le vent entrant dans le booster de puissance au moyen des deux parois verticales,
- de neutraliser un flux F1 parasite s'opposant à la rotation, de le dévier et de le transformer en un flux F3 ou F4 dérivé moins puissant mais productif au moyen de la paroi formant le bouclier 3,
- d'élargir les extrémités du conduit 8 et d'augmenter la quantité d'énergie poussée à l'intérieur du conduit 8 au moyen des déflecteurs 6,
- d'accélérer, la vitesse d'écoulement du fluide venteux arrivant au contact de la pale 2 au moyen du goulot d'étranglement 9,
- de diriger le flux venteux vers le bord extérieur des pales ouvertes au vent, au moyen des bras, augmentant ainsi la puissance et la vitesse de l'éolienne,
- de produire et de maintenir la rotation de l'éolienne avec des vents très faibles ou des vents très forts,
- de maîtriser la vitesse de rotation de l'éolienne,
- de garantir sa sécurité,
- d'augmenter la puissance, et
- d'améliorer la productivité.

### [Fonctionnement du dispositif]

### L'éolienne

Le dispositif éolien selon l'invention présente un mode de fonctionnement nouveau et impliquant la participation du booster de puissance, du régulateur de vitesse, de l'éolienne et a répartition des tâches afférentes à chacun de ces trois systèmes.

L'éolienne ou turbine présente une architecture semblable à celle d'une roue à aubes et son fonctionnement est basé sur le même principe. Cela étant, selon l'invention, le fluide moteur n'est pas un courant d'eau mais un courant d'air et les pales, représentant les aubes, tournent autour d'un arbre central de rotation vertical.

L'éolienne n'exerce qu'une seule fonction, convertissant l'énergie fournie par le booster en un mouvement rotatif. Cette énergie étant utilisée de la manière suivante :
- la pale entrant en contact avec le flux venteux dans le goulot d'étranglement, reçoit et capte l'énergie de la poussée sur la partie rectangulaire pleine extérieure (opposée à l'arbre central de rotation) de la pale;
- la partie rectangulaire ajourée intérieure de chaque pale ouvre un passage au vent qui, poursuivant sa trajectoire, vient exercer une poussée sur l'extrémité des pales voisines précédentes;
- au plus la moitié des pales de l'éolienne sont interposées dans le flux venteux dans le goulot d'étranglement, chacune des pales coopérant avec le flux venteux subissant une poussée continue.

Les forces s'exerçant sur les pales ouvertes au vent sont réparties uniformément sur l'ensemble des pales de l'éolienne par l'intermédiaire des barres stabilisatrices. Le fonctionnement de l'éolienne dépend de son exposition au vent est contrôlé par le booster de puissance et par le régulateur de vitesse, ces deux systèmes permettant à l'éolienne :
- de maintenir sa rotation sous l'action de vents faibles, modérés ou violents, en optimalisant sa puissance et sa productivité, et ;
- de réduire sa vitesse, partiellement ou totalement, sous l'action de vents tempétueux afin d'assurer sa sécurité.

Au cours d'une rotation, du fait du bouclier, au plus la moitié des pales, entrent en contact avec le vent. Les autres pales ne sont pas exposées au vent et en sont écartées par la paroi du booster contenant le bouclier. Les unes après les autres, les pales subissent successivement la poussée du fluide venteux sur un temps très court, inférieur de moitié au moins à la durée d'une rotation de l'éolienne sur elle-même. Les forces s'exerçant sur les pales ouvertes au vent sont réparties de manière égale sur l'ensemble des pales de la turbine formant l'éolienne par l'intermédiaire des barres stabilisatrices. Le sens de rotation de l'éolienne est déterminé par la direction du vent : si le vent tourne, le sens de rotation s'inverse.

Dans le mode de réalisation particulier dans lequel l'éolienne comporte huit pales, au plus quatre des pales de l'éolienne sont interposées dans le flux venteux s'écoulant dans le goulot d'étranglement, chacune de ces quatre pales subissant, dans cette portion du circuit une poussée continue, d'intensité variable, sur une longueur de temps représentant environ de de l'ordre 45% de la durée d'une rotation de l'éolienne.

### Le booster de puissance

Le booster de puissance est un système qui rassemble différents moyens visant à augmenter la puissance et la productivité de l'éolienne. Des premiers moyens permettent de capter une quantité d'énergie supplémentaire venant s'ajouter à celle arrivant naturellement sur les pales. D'autres moyens sont destinés à améliorer le fonctionnement de l'éolienne, notamment les bras permettant d'orienter le flux venteux sur la partie extérieure de la (des) pale(s), d'augmenter le moment de la force de rotation et par voie de conséquence la puissance et la vitesse de l'éolienne. Les éléments constituant le booster de puissance et leur organisation, permettent :
- de créer un conduit -ou un couloir- canalisant le vent au moyen d'au moins les deux parois verticales,
- d'élargir les extrémités du conduit, augmentant la quantité d'énergie poussée à l'intérieur du conduit du booster de puissance, facilitant le démarrage de l'éolienne et maintenant sa rotation avec des vents très faibles au moyen des déflecteurs,
- de neutraliser le flux parasite s'opposant à la rotation, de le dévier et de le transformer en partie en un flux productif au moyen de la paroi contenant le bouclier,
- de créer un rétrécissement du conduit au niveau des bras, entraînant une accélération de la vitesse d'écoulement du fluide entrant dans la turbine, notamment par effet Venturi, et
- de diriger, au moyen des bras, le flux venteux moteur sur le bord extérieur des pales ouvertes au vent.

Le booster de puissance a deux fonctions principales.

D'abord il neutralise les forces s'opposant à la rotation. A cet égard, en l'absence du booster de puissance, l'éolienne ne tourne pas.

Ensuite, le booster de puissance joue un rôle comparable à celui du turbocompresseur dans un moteur thermique, amenant un supplément d'énergie, entraînant un gain de puissance mais aussi de productivité en permettant la rotation de l'éolienne avec des vents très faibles.

Le booster de puissance comporte des moyens adaptés permettant :
- de créer, avec les deux parois verticales, un conduit canalisant le vent,
- d'élargir les extrémités du conduit par les déflecteurs 6, augmentant de ce fait la quantité d'énergie poussée à l'intérieur du conduit, facilitant le démarrage de l'éolienne et maintenant sa rotation par des vents très faibles,
- de neutraliser le flux opposé à la rotation, le déviant et le transformant partiellement en un flux productif, du fait de la paroi contenant le bouclier,
- de créer un rétrécissement du conduit au niveau des bras, entraînant une accélération de la vitesse d'écoulement du vent entrant en contact avec la pale 2,
- de diriger le flux venteux traversant le booster de puissance sur un bord extérieur des pales 2 ouvertes au vent, en augmentant le moment de la force de rotation et entrainant un gain de puissance et de vitesse de l'éolienne.

### Le régulateur de vitesse

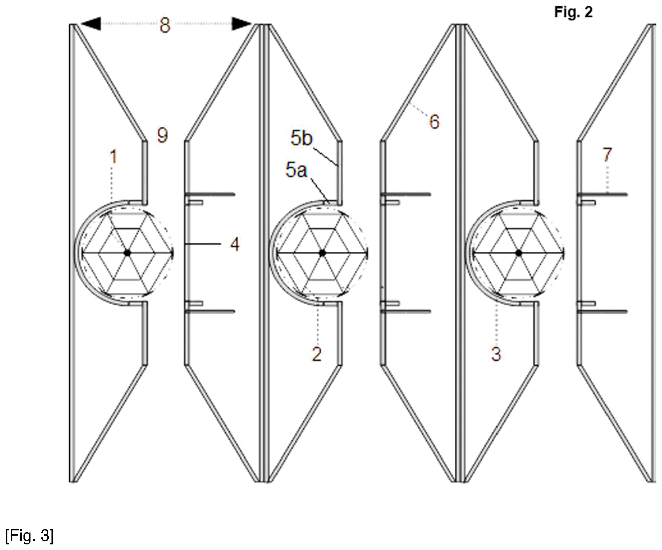

Le régulateur de vitesse est un système destiné à modifier la vitesse de l'éolienne en agissant par un déplacement des portes coulissantes. Ces manœuvres sont dirigées et contrôlées par un programmateur connecté à au moins un instrument de mesure, tel que par exemple choisi parmi une girouette, un anémomètre et un compte tour. Seule la porte 7 coulissante s'étendant du côté d'entrée du vent -dite porte sous le vent- est déplacée par coulissement vers l'intérieur du booster de puissance (comme indiqué par la flèche en Figure 1 et en Figure 2), la porte opposée restant totalement ouverte. Le déplacement de la porte s'étendant du côté d'entrée du vent réduit la largeur du booster de puissance et sa section de passage du vent, ainsi que la poussée s'exerçant sur la pale. Une partie de l'énergie est absorbée par la porte coulissante. En outre et surtout, le moment de la force appliquée sur la pale est modifié par la diminution du rayon de la partie d'éolienne exposée au vent. Plus l'ouverture du conduit formant le booster de puissance se réduit, plus le moment de force diminue, la puissance procurée et la vitesse de l'éolienne qui en dépendent étant elles-mêmes diminuées.

Les portes coulissantes et le régulateur de vitesse sont adaptés pour modifier le fonctionnement de l'éolienne et permettent :
- d'adapter la quantité d'énergie mise à la disposition de l'éolienne,
- de maîtriser sa vitesse, la réduisant ou l'annulant si nécessaire conformément aux normes de sécurité et/ou selon les circonstances,
- de maintenir un fonctionnement sécurisé et optimal sous l'emprise de vents violents, en augmentant son temps de travail et produisant dans ces conditions, une puissance optimale
- d'augmenter la durée du travail, et
- de garantir la sécurité de l'éolienne contre les tempêtes, arrêtant si nécessaire sa rotation par la fermeture totale de toutes les portes.

Le fonctionnement du régulateur de vitesse est aléatoire et dépend exclusivement de la vitesse du vent :
- par vent faible : pas d'intervention du régulateur de vitesse,
- par vents modérés à forts : intervention éventuelle du régulateur de vitesse en fonction de la vitesse de rotation de l'éolienne. Cette manœuvre est commandée par le programmateur qui ajuste, par le déplacement électrique des portes coulissantes, l'ouverture du conduit, la réduisant ou l'augmentant si nécessaire, modifiant dans le même sens la vitesse de rotation de l'éolienne tout en maintenant un captage de l'énergie optimal, dans des conditions de sécurité. Lors de ces manœuvres seule la porte coulissante, dite porte sous le vent, d'entrée du conduit face au vent est déplacée, la porte coulissante de sortie restant entièrement ouverte,
- par vents violents, c'est-à-dire par vent atteignant le vitesse de 90 km/h et plus et justifiant l'arrêt de la plupart des éoliennes à axe horizontal) : intervention systématique du régulateur de vitesse, s'exerçant par la fermeture partielle du conduit, mais l'éolienne continue de tourner à la vitesse maximale autorisée, bénéficiant d'une énergie sur abondante et fournissant une puissance optimale,
- dans les cas extrêmes, fortes tempêtes : fermeture totale de toutes les portes coulissantes et arrêt de l'éolienne.

Le dispositif selon l'invention comporte un protocole d'installation exigeant, pour son fonctionnement. Ce protocole d'installation impose :
- que le dispositif soit installé à l'intérieur d'un bâtiment, dans les étages élevés,
- qu'il soit placé entre deux planchers horizontaux du bâtiment, sur lesquels il est fixé,
- que les extrémités du booster de puissance soient positionnées sur deux façades opposées, ouvertes sur le milieu extérieur et alignées sur l'axe des vents dominants.

La combinaison du booster de puissance et du régulateur de vitesse, permet de contrôler le fonctionnement du dispositif éolien, permettant à l'éolienne :
- de produire sa rotation,
- de maîtriser sa vitesse,
- de garantir sa sécurité,
- d'augmenter sa puissance,
- d'améliorer sa productivité.

### [Applications du dispositif éolien selon l'invention]

Les éoliennes sont des outils destinés à capter l'énergie du vent. Cette énergie n'étant pas consommée sur place, est reconvertie en électricité facile à transporter et offrant un grand nombre d'utilisations. Aujourd'hui, l'époque des moulins à vent étant révolue, les éoliennes, ne servent plus qu'à entraîner des générateurs d'électricité. Elles sont installées dans des régions bien ventées, marquées par des vents dominants qui soufflent fortement et régulièrement, empruntant les mêmes couloirs géographiques qu'ils parcourent dans un sens ou dans le sens opposé. Par conséquent, l'implantation des dispositifs selon l'invention doit être ciblée sur cette source d'énergie, la plus abondante.

Le booster de puissance est indispensable au fonctionnement de ce type d'éolienne et il contribue aussi à augmenter sa puissance ; l'optimisation de ce système est donc une priorité ; elle demande un captage de l'énergie le plus important possible : opération conditionnée par l'allongement des déflecteurs et par la largeur des extrémités du conduit. Tous les modes de réalisation visant cet objectif seront pertinents.

Le dispositif éolien selon l'invention apporte une nouveauté dans le fonctionnement de l'éolienne, permettant de l'adapter à une large gamme de vitesses de vents et de créer un gain d'autonomie, de puissance et de productivité.

Le dispositif éolien selon l'invention peut être positionné de deux manières différentes à l'intérieur du bâtiment, sans déroger au protocole d'installation :
- soit verticalement, l'éolienne tournant autour d'un axe vertical,
- soit horizontalement, l'éolienne tournant autour d'un axe horizontal. Dans ce cas, les portes coulissantes du régulateur de vitesse sont remplacées par des rideaux métalliques en déplacement selon un axe vertical, installés au niveau des goulots d'étranglement, au-dessus de la turbine formant l'éolienne. Ces rideaux jouent le même rôle que les portes coulissantes ; ils sont abaissés ou remontés partiellement ou totalement selon les circonstances.

Quel que soit le mode d'installation, plusieurs dispositifs verticaux ou horizontaux peuvent être alignés sur un même niveau et plusieurs niveaux peuvent être superposés.

Le dispositif éolien selon l'invention est adaptable à l'ensemble des demandes du marché. Il couvre une large gamme de dispositifs allant du petit, au moyen et au grand éolien pouvant rivaliser dans cette dernière catégorie avec les géants de la concurrence. L'avantage procuré par le gabarit du grand éolien est compensé par le nombre possible de dispositifs éoliens selon l'invention et par une structure architecturale simple formée d'un bâtiment sensiblement parallélépipédique rectangle ou non, comportant deux façades opposées sensiblement perpendiculaires à l'axe d'un vent dominant et une pluralité d'étages, chaque étage pouvant accueillir un ou plusieurs dispositif(s) éolien(s) selon l'invention verticaux ou horizontaux, alignés parallèlement ou perpendiculairement sur l'axe d'un vent dominant. Les coûts d'installation et de maintenance sont en réalité moins élevés pour une telle structure que pour une éolienne offshore.

### [Avantages de l'invention].

Les éoliennes sont apparues au VII ou VIII siècle en Mésopotamie, se sont multipliés en Europe au moyen âge avec les moulins à vent. Elles n'ont depuis que peu évolué. Le dispositif éolien selon l'invention comporte des innovations marquant des progrès dans la conception et le fonctionnement de ces machines; ces avancées technologiques entraînant par ailleurs, des avantages sur un plan énergétique, environnemental et économique.

### Impact sur l'environnement.

En général, les éoliennes industrielles sont regroupées dans de vastes parcs éoliens. Par leur taille, leur nombre et leur mouvement, elles captent automatiquement l'attention et le regard. Les éoliennes industrielles, tripales, à axe horizontal, se sont imposées sur tous les territoires. Leur concentration dans certaines régions provoque des rejets par une partie de la population. Les nuisances produites par ces méga-machines, leurs impacts visuels et sonores notamment, sont à l'origine des doléances. Ces hordes de « géants » agitant leurs bras démesurés troublent le visiteur, détruisent la quiétude d'un site, dégradent la nature, enlaidissent un paysage, une région et irritent le voisinage.

Le dispositif éolien selon l'invention est quant à lui discret. II est installé dans un bâtiment et a un impact sur l'environnement qui est plus acceptable. II a l'avantage de passer inaperçu. Du fait de sa conception, il est silencieux et invisible hors du bâtiment qui l'abrite et le protège. II s'intègre avantageusement dans un milieu rural ou urbanisé, n'attirant pas plus l'attention et le regard qu'un bâtiment ordinaire.

Les pales des éoliennes industrielles balaient de vastes espaces aériens produisant des vitesses très élevées à leurs extrémités (350 km/h environ pour des pales de 80 m effectuant 12 tours par minute) et un bruit gênant pour le voisinage. Le dispositif éolien selon l'invention comporte une turbine beaucoup plus petite, balayant un espace plus réduit et produisant à l'extrémité des pales des vitesses peu élevées. Pour une turbine de 6 m de diamètre, effectuant 60 tours/minute, la vitesse à l'extrémité des pales est de 67 km/h environ. Par conséquence, le bruit est fortement réduit voire imperceptible.

Les éoliennes industrielles ont un impact très négatif sur la faune sauvage ; leurs mouvements et le bruit qu'elles produisent, repoussent les animaux, réduisent leur territoire et sont très meurtrières pour les oiseaux. Le dispositif éolien selon l'invention est silencieux et sans danger pour les volatiles. La turbine a une petite envergure, de surcroît elle est contenue dans un conduit protégé par un bâtiment et la vitesse de l'extrémité des pales est peu élevée. Par conséquence, le dispositif éolien selon l'invention est mieux adapté à la préservation et la protection de la nature.

L'installation du dispositif éolien selon l'invention passe par la construction d'un bâtiment couvrant au sol une surface relativement faible, notamment inférieure à 0,5 ha, alors que les parcs photovoltaïques ou éoliens occupent des dizaines voire des centaines d'hectares pour la même puissance installée; le démantèlement des installations, notamment le recyclage des composants, ne pose pas de problème majeur avec le dispositif selon l'invention, alors que les parcs éoliens ou photovoltaïques nécessitent pour ces opérations, des travaux beaucoup plus compliqués et onéreux.

### Performances énergétiques : puissance et productivité.

Le dispositif éolien selon l'invention comporte des innovations techniques et un fonctionnement nouveau qui dopent sa puissance, sa productivité et son rendement. Selon l'invention, le captage de l'énergie est réalisé en façade d'un bâtiment, par des boosters de puissance dont l'embouchure est supérieure, en général, à celle de l'ensemble des pales d'une éolienne industrielle classique. A titre d'exemple, la surface d'une façade de dimensions de 150 par 60 mètres est de 9000 m². En comparaison, la surface de l'ensemble des trois pales de dimensions de 80 par 5 mètres d'une éolienne industrielle couvre 1200 m². Les capacités de captage d'un flux venteux du dispositif éolien selon l'invention sont multipliées par un facteur 7,5 par rapport à cette éolienne industrielle. L'énergie captée par les éoliennes industrielles comporte des énergies parasites alors que le dispositif éolien selon l'invention neutralise ces énergies parasites, les reconvertissant en partie en énergie productive. Le dispositif éolien selon l'invention possède des moyens techniques lui permettant d'utiliser la totalité de l'énergie captée avec un maximum d'efficacité.

Le dispositif éolien selon l'invention présente dans sa conception et son fonctionnement des similitudes avec les turbines à augets, type Pelton, présentant un rendement énergétique élevé, de l'ordre de 85% à 90%. Un tel rendement est supérieur à celui des éoliennes industrielles classiques qui ne serait que de 35% à 45%.

### Avantages économiques.

Un dispositif éolien selon l'invention est conçu pour être assemblé à un bâtiment pouvant rassembler une pluralité de tels dispositifs éoliens. La taille du bâtiment et le nombre de dispositifs éolien selon l'invention installés peuvent être des grandeurs variables et permettent d'adapter l'invention à toutes les demandes du marché. Elles permettent d'adapter l'invention aux demandes des petites et moyennes entreprises ou collectivités pour lesquelles la demande est forte et la concurrence quasiment inexistante. Elles permettent d'adapter l'invention aux demandes de la production industrielle d'électricité, domaine fortement investi aujourd'hui par l'éolien off-shore et misant sur la météo marine pour améliorer sa puissance et sa productivité. En regard, le dispositif éolien selon l'invention appartenant à l'éolien terrestre, il est compétitif sur ces critères et supplante économiquement les éoliennes off-shore sur les coûts d'installation, de maintenance et sur la rentabilité.

Le vent est une source intermittente produisant, de façon aléatoire, des quantités d'énergie très différentes, ce qui pénalise fortement les éoliennes classiques dont le fonctionnement est fréquemment interrompu. Le dispositif éolien selon l'invention dispose d'un fonctionnement adapté à cette instabilité naturelle. Le booster de puissance et le régulateur de vitesse permettent la rotation de l'éolienne sous l'effet de vents faibles, modérés ou violents en optimalisant la puissance et de la productivité.

Le dispositif éolien selon l'invention comporte de nombreuses innovations qui en font un outil performant, respectueux de l'environnement, favorisant la production et l'utilisation d'une énergie « décarbonée » produite par une technologie nouvelle, non polluante, moins coûteuse, plus avantageuse pour la population et pour la planète.

## Revendications

1. Dispositif éolien réunissant au sein d'un bâtiment, trois systèmes, dont :
- une éolienne,
- un booster de puissance, et
- un régulateur de vitesse,
le dispositif éolien étant **caractérisé en ce que** :
- l'éolienne est constituée d'un arbre (1) central, vertical, cylindrique et rotatif sur lequel est installée au moins une architecture comparable à celle d'une roue à aubes, comportant des pales ou des aubes (2) formant les rayons de la roue,
les pales sont composées chacune d'un cadre rectangulaire rigide, fixé verticalement sur l'arbre central de rotation,
- le booster de puissance forme un conduit limité par deux parois verticales de guidage d'un flux venteux entrant dans le booster de puissance,
une première de ces deux parois verticales est composée, dans sa partie centrale, d'un bouclier (3) englobant l'éolienne et est prolongée vers l'extérieur par un déflecteur (6) incliné par rapport à l'axe d'allongement du conduit, de façon à former un conduit évasé à ses extrémités longitudinales et formant un goulot d'étranglement au niveau du bouclier (3),
une deuxième de ces deux parois verticales du conduit est une paroi s'étendant en regard de la première paroi et constituée d'une cloison (4) rectiligne d'une longueur égale au diamètre du bouclier (3),
l'arbre (1) central de rotation de l'éolienne étant décalé latéralement par rapport au goulot d'étranglement et ne s'étendant pas dans le goulot d'étranglement, de sorte que le flux venteux circulant dans le goulot d'étranglement ne coopère qu'avec une partie des pales ouvertes au vent, ladite partie de pales formant l'extrémité libre des pales, ce par quoi le flux venteux entrant dans le booster de puissance est orienté sur le bord extérieur des pales ouvertes au vent, le moment de la force de rotation étant ainsi optimisé, entraînant un gain de puissance et de vitesse de rotation de l'éolienne,
- le régulateur de vitesse comporte deux portes (7) coulissantes et un programmateur, connecté à au moins un instrument de mesure choisi parmi une girouette, un anémomètre et un compte tour,
les portes (7) coulissantes étant installées au niveau du goulot d'étranglement, à l'extérieur du conduit, derrière la paroi du conduit faisant face à l'éolienne qu'elles encadrent longitudinalement, conduit dans lequel elles peuvent être déplacées.

2. Dispositif éolien selon la revendication 1, **caractérisé en ce que** les pales sont au nombre de quatre (4), de cinq (5) ou de six (6).

3. Dispositif éolien selon la revendication 1, **caractérisé en ce que** les pales sont au nombre de huit (8).

4. Dispositif éolien selon l'une des revendications 1 à 3, **caractérisé en ce que** le déflecteur (6) est incliné d'une valeur d'angle de 30° par rapport à l'axe d'allongement du conduit.

5. Dispositif éolien selon l'une des revendications 1 à 3, **caractérisé en ce que** le déflecteur (6) est incliné d'une valeur d'angle de 30° à 40° par rapport à l'axe d'allongement du conduit.

6. Dispositif éolien selon l'une des revendications 1 à 5, **caractérisé en ce que** la partie centrale de chaque pale est constituée d'un panneau réalisé en au moins un matériau rigide, léger et résistant.

7. Dispositif éolien selon l'une des revendications 1 à 5, **caractérisé en ce qu'**au moins une pale -notamment chaque pale- forme(nt) deux parties délimitées par le cadre, dont :
- une partie rectangulaire ajourée (2a) en son centre et s'étendant radialement à partir de l'arbre (1) central de rotation de l'éolienne, et ;
- une partie rectangulaire pleine (2b), adjacente à la partie rectangulaire ajourée (2a) et s'étendant radialement vers l'extérieur de la roue en prolongement de la partie rectangulaire ajourée (2a).

8. Dispositif éolien selon la revendication 7, **caractérisé en ce que** la partie rectangulaire pleine de chaque pale forme de 20% à 25% de la surface totale de la pale.

9. Dispositif éolien selon l'une des revendications 1 à 8, **caractérisé en ce que** les pales sont réunies entre elles par un ensemble de barres stabilisatrices (2c) disposées horizontalement; chacune reliant par ses extrémités les cadres de deux pales voisines, l'ensemble des barres stabilisatrices (2c) forme un premier polygone régulier centré sur l'arbre (1) central de rotation et installé dans un plan horizontal, et un deuxième polygone régulier, semblable au premier polygone et composé de barres stabilisatrices plus courtes, installé de manière identique, est associé au premier polygone pour former une structure solidarisant tous les éléments de l'éolienne,
deux ou trois structures de ce type sont superposées et centrées sur l'arbre central de rotation pour renforcer la charpente de l'éolienne: une près du sommet, une autre près de la base, éventuellement une troisième équidistante des deux autres.

10. Dispositif éolien selon l'une des revendications 1 à 9, **caractérisé en ce que** le bouclier (3) forme un demi cylindre creux ceinturant une moitié de l'éolienne et d'une hauteur égale à celle des pales (2), chacun des bras (5a) étant constitué d'un panneau rigide rectangulaire d'une hauteur égale à celle du bouclier (3),
chacun des bras (5) étant fixé sur l'une des arrêtes verticales du bouclier (3) et s'étendant dans le prolongement à l'extérieur du bouclier (3) et étant aligné sur l'axe de coupe du demi cylindre, chaque déflecteur (6) est constitué d'un panneau rigide rectangulaire d'une hauteur égale à celle du bouclier (3), chacun étant fixé sur une arrête verticale d'un avant-bras (5b) prolongeant le bras (5a) et présentant une inclinaison de l'ordre de 30° par rapport à l'axe de coupe du demi cylindre.

11. Dispositif éolien selon l'une des revendications 1 à 10, **caractérisé en ce que** les portes (7) coulissantes sont adaptées chacune pour pouvoir être déplacée de façon à pouvoir obturer au moins partiellement le conduit,
l'une des deux portes (7) coulissantes, dite porte sous le vent, étant adaptée pour pouvoir être déplacée à partir d'une position d'ouverture de ladite porte sous le vent dans laquelle ladite porte sous le vent n'est pas engagée dans le conduit, le conduit étant ouvert, et pour pouvoir atteindre au moins une position prédéterminée de fermeture au moins partielle de ladite porte sous le vent, position de fermeture dans laquelle un bord libre de ladite porte sous le vent en déplacement dans le conduit est amené en rapprochement de l'arbre central de rotation de l'éolienne, le conduit étant au moins partiellement fermé, ce par quoi le moment de la force appliquée sur la pale est modifié par la diminution du rayon de la partie d'éolienne exposée au vent.

12. Installation comprenant un dispositif éolien selon l'une des revendications 1 à 11, **caractérisé en ce que** :
- le dispositif éolien est à l'intérieur du bâtiment, dans les étages élevés,
- le dispositif éolien est placé entre deux planchers horizontaux sur lesquels il est fixé,
- les extrémités du booster de puissance sont positionnées sur deux façades opposées du bâtiment, ouvertes sur le milieu extérieur et alignées sur l'axe d'un vent dominant.
